Europäisches Patentamt

European Patent Office

Office européen des brevets

(19)

(11) Veröffentlichungsnummer: **0 215 286**
**B1**

(12) **EUROPÄISCHE PATENTSCHRIFT**

(45) Veröffentlichungstag der Patentschrift: **14.03.90**

(21) Anmeldenummer: **86111083.1**

(22) Anmeldetag: **11.08.86**

(51) Int. Cl.⁵: **H 01 S 3/097, H 01 F 31/00**

(54) **Hochleistungs-Impulsübertrager für kurze Impulse hoher Spannung und/oder hoher Ströme.**

(30) Priorität: **21.08.85 DE 3529915**

(43) Veröffentlichungstag der Anmeldung:
**25.03.87 Patentblatt 87/13**

(45) Bekanntmachung des Hinweises auf die
Patenterteilung:
**14.03.90 Patentblatt 90/11**

(84) Benannte Vertragsstaaten:
**AT CH DE FR GB IT LI**

(56) Entgegenhaltungen:
EP-A-0 072 151
EP-A-0 130 443
DE-A-2 529 296

INSTRUMENTS & EXPERIMENTAL
TECHNIQUES, Band 22, Nr. 4, Teil 2, Juli/August
1979, Seiten 1053-1056, Plenum Publishing
Corp., New York, US; S.S. VDOVIN: "Powerful
high-voltage pulsed transformer"

(73) Patentinhaber: **Siemens Aktiengesellschaft
Wittelsbacherplatz 2
D-8000 München 2 (DE)**

(72) Erfinder: **Cirkel, Hans-Jürgen, Dr.
Hollunderweg 8
D-8525 Uttenreuth (DE)**
Erfinder: **Bette, Willi
Pappelgasse 7c
D-8520 Erlangen (DE)**

(56) Entgegenhaltungen:
REVIEW OF SCIENTIFIC INSTRUMENTS, Band
50, Nr. 9, September 1979, Seiten 1151-1153,
American Institute of Physics, New York, US;
V.E. MERCHANT et al.: "Novel transformer
designs for high-power high-repetition-rate
applications"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf einen Hochleistungs-Impulsübertrager für kurze Impulse hoher Spannung und/oder hoher Ströme, vorzugsweise für Schaltkreise von Hochleistungslasern, gemäß Oberbegriff des Anspruchs 1.

Ein solcher Hochleistungs-Impulsübertrager ist durch (1) — siehe anliegendes Literaturverzeichnis — bekannt. Bevor darauf näher eingegangen wird, zunächst einige Ausführungen grundsätzlicher Art.

Bei direkter Kopplung gelingt es in der Hochleistungsimpulstechnik häufig nicht, den Widerstand der Last an den charakteristischen Widerstand eines pulserzeugenden Netzwerkes anzupassen. Häufig mangelt es auch an Schaltelementen, welche die von der Anwendung her vorgegebenen Spannungen und Ströme zu schalten vermögen.

Eine Möglichkeit, diese technischen Einschränkungen zu umgehen, bietet der Einsatz von Hochleistungs-Impulsübertragern, auch vereinfachend als Pulstransformatoren bezeichnet. Ihre möglichen Aufgaben sind u.a.: Stromanpassung, Spannungsanpassung, Impedanzanpassung, Potentialtrennung und Potentialumkehr.

Einige Anwendungsfälle seien im Folgenden näher erläutert: Bei der Aufladung eines pulserzeugenden Netzwerkes mit Flüssigdielektrikum, wie es z.B. bei Hochleistungspulslasern eingesetzt wird — vergleiche dazu EP-A1-0,024,576, insbesondere Fig. 11 (2) — brächte es technische Vorteile, die Aufladung aus einem thyristorgeschalteten Netzteil vorzunehmen. Thyristoren schalten verhältnismäßig hohe Ströme bei niedrigen Haltespannungen. Das pulserzeugende Netzwerk soll im µsec-Bereich auf Spannungen von mehreren 10 kV aufgeladen werden.

Zur Anpassung der niedrigen Spannung im Thyristorkreis an die erforderliche hohe Spannung im pulserzeugenden Netzwerk kann ein Resonanztransformator eingesetzt werden, wie z.B. in (3) beschrieben. In diesem speziellen Fall beträgt indessen die Aufladezeit des pulserzeugenden Netzwerks mehrere Millisekunden. Um eine Aufladung in wenigen µsec zu erreichen, muß ein pulsübertrager eingesetzt werden, dessen Streuinduktivität auf ein Mindestmaß reduziert ist.

Mit herkömmlichen Hochspannungstransformatoren lassen sich wegen ihrer bauartbedingten hohen Streuinduktivitäten die geforderten Energien in der kurzen Zeit nicht übertragen. Ein weiteres Erfordernis ist, den Übertrager bei hohen Wiederholraten, auch unter der Abkürzung PRR (= pulse repetition rate) bekannt, betreiben zu können. Es stellt sich dann das Problem, in der notwendigerweise kompakten Anordnung die Verlustwärme effektiv abzuführen.

Zur Problematik und zum Anwendungsbereich von gattungsgemäßen Hochleistungs-Impulsübertragern muß auch auf die Versorgung einer Röntgenblitzröhre zur Erzeugung von Röntgenimpulsen im Submikrosekundenbereich hoher Intensität, insbesondere auch bei hohen Wiederholraten, verwiesen werden. Bei der Ansteuerschaltung der Röntgenblitzröhre können das pulserzeugende Netzwerk und das Schaltelement auf die erforderliche Beschleunigungsspannung der Röntgenröhre ausgelegt sein, vergleiche (4), (5) und (6). Der Nachteil dieser bekannten Anordnungen liegt in der notwendigen hohen Spannungsfestigkeit der Bauelemente, die insbesondere bei hohen Wiederholraten hohe technologische Schwierigkeiten mit sich bringt.

Eine weitere Möglichkeit, eine Röntgenröhre anzusteuern, besteht darin, den Versorgungsimpuls für die Röntgenröhre an der Sekundärseite eines Pulsübertragers abzugreifen. Ausführungen dazu finden sich in (4) und (7). Schwierigkeiten treten bei dieser Methode dann auf, wenn möglichst hohe Energien in möglichst kurzer Zeit übertragen werden sollen. Zur Erhöhung der Grenzfrequenz eines Übertragers für derart hohe Spannungen bei gleichzeitig niedrigem Innenwiderstand muß eine sehr enge Kopplung zur Reduzierung des inneren Spannungsabfalles angestrebt werden, bei gleichzeitig kleinstmöglicher Streuinduktivität. Die dazu erforderliche Minimierung der Isolationsabstände zwischen Sekundär- und Primärwicklung sowie zwischen dem Kern und den Wicklungen führt wegen der hohen Spannungen zu extrem hohen elektrischen Feldstärken.

Der gattungsgemäße Hochleistungs-Impulsübertrager nach (1), von dem die Erfindung ausgeht, weist zwar schon die gewünschte kurze Pulsdauer auf, es ist jedoch zu verzeichnen, daß schon bei relativ hohen Lastwiderständen das Übetragungsverhältnis, bezogen auf das Leerlaufübersetzungsverhältnis, beträchtlich abfällt. Weitere technische Nachteile dieses bekannten Impulsübertragers ergeben sich insbesondere bei höheren Spannungen und vor allem im Dauerbetrieb. Bei den notwendigerweise sehr hohen elektrischen Feldstärken treten bei den Pulsen kurzer Anstiegszeit auch in sorgfältig ausgewählten und verarbeiteten festen Dielektrika Koronaeffekte auf, die eine irreparable Zerstörung des Dielektrikums zur Folge haben und damit zum Ausfall des Übertragers führen können. Bei hohen Wiederholraten und hohen mittleren Leistungen würde ein festes Dielektrikum ferner die Abfuhr unvermeidlicher Verlustwärme aus dem weichmagnetischen Kern technisch außerordentlich erschweren.

Die der Erfindung zugrunde liegende allgemeine Aufgabe besteht darin, die beim gattungsgemäßen Hochleistungs-Impulsübertrager nach (1) auftretenden Schwierigkeiten zu meistern, wobei die Streuinduktivität noch weiter als beim Bekannten reduziert, die Koronaeffekte vermieden bzw. die Spannungsfestigkeit gesteigert sowie die Abfuhr der Verlustwärme verbessert werden sollen.

Diese allgemeine Aufgabenstellung gilt auch in bezug auf einen weiteren bekannten Impulsübertrager nach (8), welcher aus einer Anordnung gestapelter blattförmiger Windungen mit Dielektrikum-Zwischenlagen besteht. Auch hier ergibt sich das Problem der Spannungsfestigkeit, weil an den Kanten der blattförmigen Leiter auftretende elektrische Feldstärken bei längerem Betrieb zwangsläufig zur baldigen Zerstörung aufgrund von Koronaeffekten führen. Die Trennflächen zwischen dem festen Dielektrikum und den Leitern werden außerdem durch die Stromkräfte erheblich mechanisch beansprucht, so daß auch dadurch elektrische Durchschläge begünstigt werden. Deshalb kann die an sich verhältnismäßig niedrige Streuinduktivität nicht ausgenutzt werden; die elektrische Isolaton ist zu störanfällig.

Nach Vorstehendem liegt der Erfindung die spezielle Aufgabe zugrunde, einen gattungsgemäßen Hochleistungs-Impulsübertrager für kurze Impulse hoher Spannung und/oder hoher Ströme zu schaffen, welcher über die allgemeine Aufgabenstellung hinaus

zur Stromanpassung, Spannungsanpassung, Impedanzanpassung, Potentialtrennung und Potentialumkehr einsetzbar ist, d.h. insbesondere auch als sogenannter "Step-up"-Transformator zur Erzeugung von Impulsen höherer Spannung bei optimaler Leistungsübertragung, aber auch als sogenannter Step-down-Transformator zur Erzeugung von kurzen Impulsen sehrhoher Stromstärke, wobei Hochspannungsimpulse heruntertransformiert und in eine sehr niederohmige Last eingespeist werden. Während bei den Step-up-Transformatoren die Eisenverluste die Kupferverluste überwiegen, müssen hingegen bei den Step-down-(Strom-)Transformatoren die Verluste in den Leitern niedrig gehalten werden durch Optimierung der Wicklungsquerschnitte;

zur Versorgung einer Röntgenblitzröhre zur Erzeugung von Röntgenimpulsen im Submikrosekundenbereich hoher Intensität, und insbesondere auch bei hohen Wiederholraten, geeignet ist;

im Betrieb als Step-up-Transformator, insbesondere zur Ansteuerung einer Röntgenblitzröhre, eine ausreichend hohe Grenzfrequenz bei gleichzeitig niedrigem Innenwiderstand und eine sehr enge Kopplung von Unter- und Oberspannungswicklung aufweist, bei gleichzeitig kleinstmöglicher Streuinduktivität.

Ausgehend von einem Hochleistungs-Impulsübertrager für kurze Impulse hoher Spannung und/oder hoher Ströme gemäß Oberbegriff des Anspruchs 1 wird die der Erfindung zugrundeliegende Aufgabe durch die im Kennzeichen des Anspruchs 1 angegebenen Merkmale gelöst. Vorteilhafte Weiterbildungen sind in den Unteransprüchen 2 bis 10 angegeben.

Die mit der Erfindung erzielbaren Vorteile sind vor allem darin zu sehen, daß die Probleme der Spannungsfestigkeit und des Abtransports der Verlustwärme bei Hochleistungs-Impulsübertragern nun grundsätzlich gelöst sind. Der Erfindungsgegenstand zeichnet sich durch die folgenden Merkmale aus:

1) Hohe Spannungsfestigkeit,
2) extrem enge Kopplung,
3) geringe Streuinduktivität und hohe Grenzfrequenz,
4) geringer Wicklungswiderstand und hohe Stromamplituden,
5) problemloses Abführen der Verlustwärme,
6) hohe Zuverlässigkeit und hohe Lebensdauer.

Zur Erzielung dieser günstigen Eigenschaften trägt im besonderen Maße bei, daß insbesondere an Orten hoher elektrischer Feldstärke auf jegliche Isolation aus festem Dielektrikum verzichtet wird. Alle Wicklungen haben selbsttragende bzw. freitragende Strukturen; darunter wird verstanden, daß die einzelnen Windungen der Ober- und Unterspannungswicklung aufgrund geeigneten Querschnitts hinreichend steife oder starre Spiralen aufweisen, welche — ohne untereinander oder am Kern abgestützt zu sein — ihre Form beibehalten und welche lediglich an Anschlußenden der kleinsten Wicklungseinheiten an den Stützisolatoren festgelegt bzw. "gefangen" sind. Die Isolation bildet eine dielektrische Flüssigkeit. Geeignet dazu sind Transformatoröl oder fluorierter Kohlenwasserstoff. In diese Flüssigkeit tauchen die Wicklungen und der Magnetkern — jeweils von separaten Haltestrukturen getragen — ein. Die dielektrische bzw. Isolierflüssigkeit ermöglicht einen problemlosen Abtransport der Verlustwärme aus dem Magnetkern, dem Dielektrikum selbst und den Wicklungen, z.B. durch Eigenkonvektion oder durch Zwangsumwälzung in einem mit einem Wärmetauscher versehenen geschlossenen Kreislauf. Es lassen sich nun hohe Spannungen bei gleichzeitig kompaktem Aufbau wegen der hohen Isolationsfestigkeit der dielektrischen Flüssigkeit technisch problemlos erreichen. Koronabildung wird vermieden, da die Flüssigkeit die blanken oder allenfalls eine dünne Oxydhaut oder Schutzlackschicht aufweisenden Leiter ausreichend gut benetzt. Sollte sich dennoch ein Spannungsüberschlag im Übertrager ereignen, so verhält sich das flüssige Dielektrikum selbstheilend. Der freitragende Aufbau erleichtert eine bifilare Anordnung von Primär- und Sekundärwicklung (Unter- und Oberspannungswicklung), eine Voraussetzung für geringstmögliche Streuinduktivität. Als Kernmaterial für die Übertrager kommen z.B. Ferrite in Frage. Durch die Verwendung von sogenannten metallischen Gläsern, vergleiche dazu (9), lassen sich aufgrund der höheren Sättigungsinduktion dieser Materialien noch kompaktere Übertrager für noch höhere Spannungen aufbauen.

Im folgenden wird anhand der Zeichnung, in welcher fünf Ausführungsbeispiele der Erfindung dargestellt sind, diese noch näher erläutert. Darin zeigt in vereinfachter, zum Teil schematischer Darstellung:

Fig. 1 ein erstes einfaches Ausführungsbeispiel für einen Hochleistungs-Impulsübertrager (im folgenden abgekürzt als Impulsübertrager bezeichnet) nach der Erfindung in einem Grundrißschnitt durch den Magnetkern und die Stützisolatoren nach der Linie I—I aus Fig. 2;

Fig. 2 den Gegenstand nach Fig. 1 im Aufriß;

Fig. 3 eine Seitenansicht des Impulsübertragers nach Fig. 1 und Fig. 2, zum Teil im Schnitt nach der Linie III—III aus Fig.2 (ein Stützisolator entfernt);

Fig. 4 ein zweites Ausführungsbeispiel, stark vereinfacht, wobei nur Magnetkern und einige kleinste Wicklungseinheiten dargestellt sind. Ein Schenkel des Trafokerns ist hier mit drei kleinsten Wicklungseinheiten bestückt, die ober- bzw. unterspannungsseitig jeweils zwei Windungen umfassen;

Fig. 5 den Impulsübertrager nach Fig. 1, zusammengebaut mit der räumlichen Anordnung eines pulserzeugenden Netzwerkes in Blümlein-Schaltung mit einem Thyratron als Hochspannungsschalter, wobei an die Sekundärseite des Impulsübertrages eine Röntgenblitzröhre angeschlossen werden kann;

Fig. 6 das Schaltschema für die Anordnung nach Fig. 5, ergänzt durch eine an die Sekundärseite des Impulsübertragers angeschlossene Röntgenblitzröhre, wobei alternativ zum Thyratron eine Funkenstrecke als schneller Hochspannungsschalter gestrichelt angedeutet ist;

Fig. 7 ein drittes Ausführungsbeispiel mit einem Ringkern-Impulsübertrager im Aufriß in einer der Fig. 3 entsprechenden Darstellung;

Fig. 8 den Schnitt längs der Linie VIII—VIII aus Fig. 7;

Fig. 9 ein fünftes Ausführungsbeispiel mit einem als Strom-(Step-down-)Transformator ausgebildeten Impulsübertrager in einer der Darstellungsweise der Figuren 1 und 8 entsprechenden Grundriß-Schnittdarstellung und

Fig. 10 einen Teilschnitt nach der Linie X—X aus Fig. 9, aus welchem der Grundriß des ovalen Magnetkerns und der Querschnitt der Wicklungsleiter erkennbar sind.

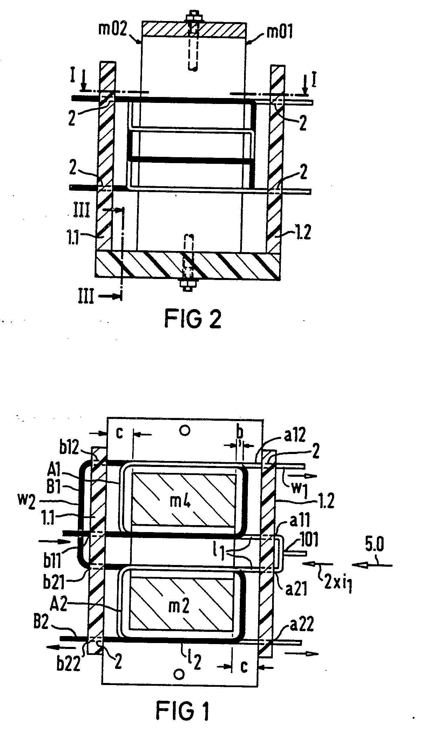

In Fig. 1 bis Fig. 3 ist die freitragende Wicklung des Impulsübertragers als Ganzes mit W bezeichnet, die Primärwicklung mit $w_1$, die Sekundärwicklung mit $w_2$. Die Primärwicklung $w_1$ ist identisch mit der Unterspannungswicklung, wenn die Primärspannung $u_1$ kleiner als die Sekundärspannung $u_2$ ist, und in diesem Falle ist auch die Sekundärwicklung identisch mit der Oberspannungswicklung. Dies gilt für den sogenannten Spannungs- oder Step-up-Transformator, wogegen bei einem Strom-(Step-down) Transformator bei höherer Spannung ein niedriger Strom, welcher der primärwicklung zugeführt wird, auf einen sekundärseitig höheren Strom bei niedriger Spannung herauftransformiert wird. Im letzteren Falle ist die Primärspannung die Oberspannung und die Sekundärspannung die Unterspannung.

Die freitragenden Wicklungen $w_1$, $w_2$ erfordern, daß jeweils eine Haltestruktur, als Ganzes mit H bezeichnet, für den Magnetkern M1, für die Primärwicklung $w_1$ und die Sekundärwicklung $w_2$ vorzusehen ist. Der Magnetkern M1, vorzugsweise ein Ferritkern, also aus hochpermeablem Material, ist als Rechteckkern ausgeführt, dessen vier in sich geschlossene Magnetschenkel m1, m2, m3, m4 um ein zentrales Fenster 5 herum angeordnet sind, s daß die beiden Breitseiten des Magnetkerns M1 (im folgenden abgekürzt als "Kern" bezeichnet) achsnormal zur Fensterachse 5.0 verlaufen.

Der Kern M1, d.h. in diesem Falle seine beiden Schenkel m2, m4, wird umschlungen von der schon erwähnten Wicklung W, wobei die Primärwicklung $w_1$ und die Sekundärwicklung $w_2$ jeweils mit dem Kern M1 und miteinander verkettet und die elektrisch isolierten, metallischen Leiter $1_1$ und $1_2$ für die Windungen $w_{01}$ der Primär- und $w_{02}$ der Sekundärwicklung $w_1$, $w_2$ weitgehend bifilar zueinander geführt sind. Primär- und Sekundärwicklung sind, wie weiter oben bereits ausgeführt, mit der Unter- und der Oberspannungswicklung bei einem Spannungstransformator identisch, welche im folgenden abgekürzt als O-Wicklung und als U-Wicklung bezeichnet werden. Unter bifilar wird hier wie im folgenden verstanden, daß die Strompfade der Wicklungsleiter $1_1$, $1_2$ bzw. Windungen $w_{01}$, $w_{02}$ derart eng benachbart und parallel zueinander verlaufen, daß die von in ihnen fließenden Strömen erzeugten magnetischen Streufelder sich weitestgehend aufheben.

Erfindungsgemäß weisen nun die bevorzugt aus einem gut leitfähigen Material mit einem spezifischen Widerstand von insbesondere

$$0{,}016 \leq \rho \left[ \frac{\Omega \cdot mm^2}{m} \right] \leq 0{,}029$$

bei 20°C bestehenden Wicklungsleiter $1_1$, $1_2$ der Primär- und Sekundärwicklung bzw. U- und O-Wicklung $W_1$, $W_2$ mit ihren äußeren Oberflächen einen hohen Wärmeübergangskoeffizienten

$$[\alpha] = [W/m^2 . K]$$

in Bezug auf das sie umspülende flüssige Dielektrikum auf, d.h., weisen eine Oberflächenstruktur auf, welche in der Bandbreite metallisch blank bis zu einer nur dünnen Oxidhaut bzw. einer nur dünnen Schutzlackschicht liegt, wobei durch die dünne Oxidhaut (bei Aluminiumleitern) oder die dünne Schutzlackschicht der Wärmeübergang vom metallischen Wicklungsleiter zum flüssigen Dielektrikum nicht wesentlich verschlechtert sein darf. Diese dünne, noch zulässige Oxidhaut oder Schutzlackschicht im µ-Bereich oder darunter kann nicht als sich erwärmendes, festes Dielektrikum wirken. Denn der an ihr angreifende Feldstärkenanteil liegt in der Größenordnung von wenigen Volt. Nimmt man an, daß zwischen dem oberen Ende der Sekundärwicklung und einer 30 mm davon entfernten Erde (z.B. eine geerdete Gehäusemetallwand) ein Hochspannungswert von z.B. 30 kV herrscht, dann entspricht das einer Feldstärke von 1 kV/mm. Die Durchschlagfeldstärke von Tranformatorenöl liegt bei $\approx$ 12 kV/mm. An einer 1µ starken Oxidhaut lägen dann etwa 1 V Spannung an. Koronaprobleme oder dergleichen, die bei einem festen, dickeren Dielektrikum auftreten könnten, sind damit ausgeschlossen. Ist die relative Dielektrizitätskonstante der dünnen Oxidhaut oder Schutzlackschicht größer als die des flüssigen Dielektrikums, dann wäre die anteilige Feldstärke noch kleiner, weil in jeder Trennfläche von dielektrischen bzw. elektrisch isolierenden Schichten die elektrische Feldstärke einen Sprung im umgekehrten Verhältnis der Dielektrizitätskonstanten (DK) erleidet. Daß heißt, die elektrische Feldstärke springt in die Höhe, wenn die DK abnimmt, und umgekehrt.

Was den Wärmeübergang von der Oberfläche der Primär- oder Sekundärwicklung auf das sie umspülende flüssige Dielektrikum angeht, so gilt allgemein nach Newton:

$$Q = \alpha \cdot A \cdot t \cdot \triangle u$$

mit

$Q$ = Wärmemenge, die durch die Grenzfläche tritt, in Joule bzw. W·s,
$\alpha$ = Wärmeübergangskoeffizient (siehe oben),
$A$ = Größe der Übergangsfläche in m²,
$t$ = Zeitdauer des Überganges in Sekunden,
$\triangle v$ = Temperaturdifferenz zwischen dem flüssigen Dielektrikum und der Oberfläche der Wicklung $W_1$ bzw. $W_2$ in K.

Die Werte für $\alpha$ lassen sich mit hinreichender Genauigkeit nur durch Versuche ermitteln; sie beruhen auf thermodynamisch komplizierten Vorgängen. Im folgenden sind deshalb nur Bereiche für ungefähre $\alpha$-Werte angegeben.

| Art des Wärmeüberganges | Thermokonvektion (ruhende Flüssigkeit an Metallwand) | | Zwangsumlauf (Flüssigkeit umgewälzt) | |
|---|---|---|---|---|
| Dielektrikum | Trafoöl | Fluorkohlenstoff | Trafoöl | Fluorkohlenstoff |
| Wärmeübergangszahl $\alpha$ $\left[\dfrac{W}{m^2 \, K}\right] \cdot 10^{-2}$ | 1,6 – 2,3 | 2,4 – 3,2 | 1,7 – 15,9 | 2,3 – 26,0 |

Diese $\alpha$-Werte dürfen durch die Oxidhaut oder Schutzlackschicht nicht wesentlich verschlechtert werden, wie oben bereits angedeutet.

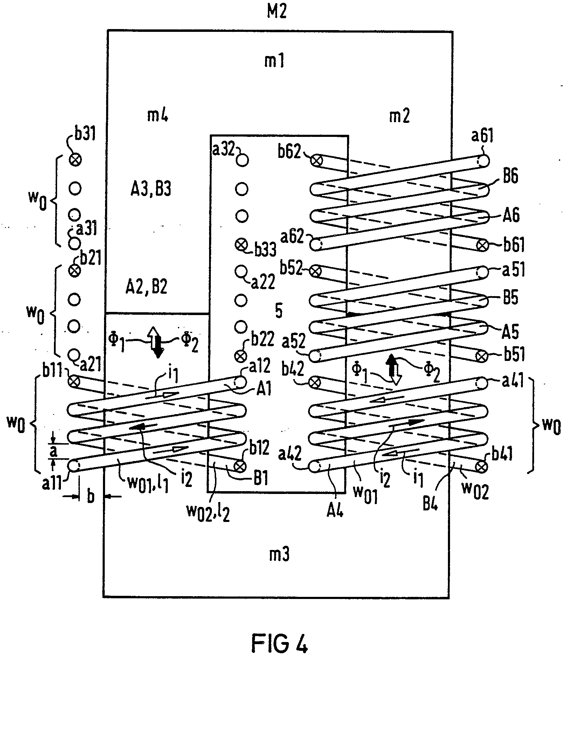

Im dargestellen Beispiel bestehen sie aus runden oder einen Rechteckquerschnitt aufweisenden Kupferleitern mit $\rho$ = 0,017 $\Omega \cdot$ mm²/m bei 20°C, wobei die Windungen eine Rechteckfläche umschließen, vergleiche dazu die noch erläuterte Detaildarstellung nach Fig. 4. Die Wicklungsleiter können auch eine Eloxierung, einen Schutzlack oder dergleichen an ihrer äußeren Oberfläche aufweisen, sofern der Warmeübergangskoeffizient $\alpha$ und/oder die Durchschlagfeldstärke die geforderten Mindestwerte erreichen.

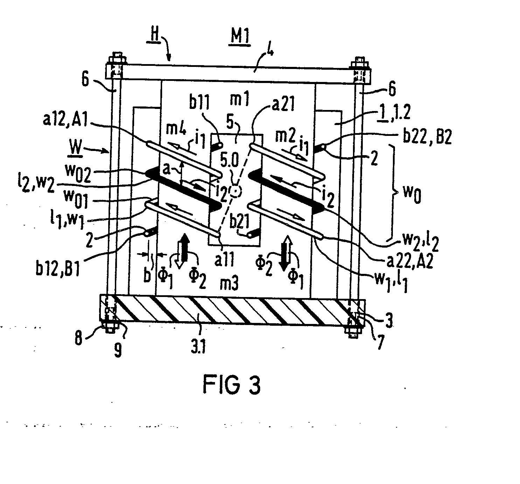

Die einzelnen Windungen $W_{01}$, $W_{02}$ von Primär- und Sekundärwicklung $W_1$, $W_2$ sind, wie bereits erwähnt, freitragend oder selbsttragend angeordnet, mit einem ersten Mindestabstand a der Windungen $W_{01}$—$W_{02}$ untereinander (Fig. 3) und mit einem zweiten Mindestabstand b zu dem von ihnen umschlungenen Kern M1 (Fig. 1 und 3). Im dargestellten Ausführungsbeispiel ist a $\approx$ 2 · b. Diese Mindestabstände a, b hängen von der im flüssigen Dielektrikum, auf welches noch eingegangen wird, herrschenden Feldstärke und von der Durchschlagfestigkeit dieses Dielektrikums selbst ab. Man erkennt außerdem vor allem aus Fig. 3, daß die Windungen $w_{01}$, $w_{02}$ von Primär- und Sekundärwicklung $w_1$, $w_2$ bifilar ineinander geschachtelt angeordnet sind. Man kann sich diese Anordnung so entstanden denken, daß je eine Spirale für $w_1$ und $w_2$ gleichen Windungsdurchmessers so ineinander geschraubt werden, daß die Windungen $w_{01}$ der einen Wicklung $w_1$ mit denjenigen $w_{02}$ der anderen Wicklung $w_2$ in Achsrichtung

5

der Spirale gesehen einander abwechseln.

Benachbart zu mindestens einer der Seiten des Kernes M1, im vorliegenden Falle benachbart zu beiden Breitseiten m01, m02 sind in einem dritten Mindestabstand c vom Kern M1 plattenförmige Stützisolatoren 1.1, 1.2 angeordnet, die generell mit 1 bezeichnet sind. Der dritte Mindestabstand c ist größer als die Summe b + d, wobei d die Leiterstärke der Windungen $w_{01}$, $w_{02}$ bedeutet. Ein praktikabler Wert für c liegt im Bereich (b + d)< c <2 × (b + d), wie man es den Figuren 1 und 2 entnehmen kann, weil in diesem Falle sich eine gute Konvektions- und/oder erzwungene Strömung im flüssigen Dielektrikum zwecks Wicklungskühlung im Raum zwischen den beiden Stützisolatoren 1.1 und 1.2 entwickeln kann.

Im Beispiel nach Fig. 1 und Fig. 3 ist jeder der beiden Schenkel m2, m4 des Rechteckkerns M1 mit je einer kleinsten Wicklungseinheit $w_0$ bewickelt (unter "bewickelt" wird hier verstanden, daß die Windungen $w_{01}$, $w_{02}$ die Schenkel umschlingen, aber nicht auf diesen sitzen oder Berührung mit ihnen haben). Jeder der beiden kleinsten Wicklungseinheiten $w_0$ umfaßt Windungsanordnungen A1, A2, zu je $\approx$ 2 Windungen $w_{01}$ der Primärwicklung $w_1$ und B1, B2 zu je $\approx$ 2 Windungen $w_{02}$ der Sekundärwicklung $w_2$, welche, wie dargestellt ineinander geschachtelt sind. Die Windungen $w_{01}$, $w_{02}$ stehen gewissermaßen frei im Raume bis auf die Enden der kleinsten Wicklungseinheiten, die im Falle der Primärwicklung $w_1$ mit a11, a12 beim Zweig A1 und mit a21, a22 beim Zweig A2 sowie im Falle der Sekundärwicklung $w_2$ mit b11, b12 beim Zweig B1 und mit b21, b22 beim Zweig B bezeichnet sind. Im folgenden werden die Windungsanordnungen bzw. kleinsten Wicklungsteileinheiten A1, A2; B1, B2 als Zweige bebezeichnet. Die Enden a11 bis a22 der Zweige A1, A2 (Primärwicklung $w_1$) und b11 bis b22 der Zweige B1, B2 (Sekundärwicklung $w_2$) der kleinsten Wicklungseinheiten $w_0$ sind zugleich Anschlußenden für die elektrische Schaltverbindung; sie sind durch Bohrungen 2 der Stützisolatoren 1.1, 1.2 hindurchgezogen und in diesen Bohrungen "gefangen", d.h. spielfrei festgelegt, wobei zu dieser Festlegung auch die in Fig. 1 bis 3 nicht näher dargestellten Anschlußklemmen und Durchführungen gehoren.

Im Beispiel nach Fig. 1 bis 3 sind die Zweige A1, A2 der beiden Wicklungseinheiten $w_0$ der Primär-wicklung $w_1$ zueinander parallel geschaltet, dagegen die Zweige B1, B2 der beiden Wicklungseinheiten $w_0$ der Sekundärwicklung $w_2$ in Reihe zueinander geschaltet, so daß primärseitig $n_1$ = 2 Windungen $w_{01}$ in Reihe liegen, sekundärseitig dagegen $n_2$ = 4 und sich so ein Übersetzungsverhältnis bei gleicher Windungsanzahl der beiden kleinsten Wicklungseinheiten $w_0$ von

$$\ddot{u} = \frac{n_2}{n_1} = \frac{4}{2} = 2$$

ergibt, wobei $w_{01}$ und $w_{02}$ jeweils eine Windung bedeuten.

Insbesondere aus Fig. 3 erkennt man, daß die weiß dargestellten Wicklungsleiter $1_1$ der Primär-wicklung $w_1$ bei der links dargestellten Wicklungseinheit $w_0$, beginnend beim Wicklungsende a11, mit dem einen der beiden parallel geschalteten Zweige A1 um den Schenkel m4 in einer aufsteigenden Links- bzw. Gegenzeiger-Spirale gewunden und in dieser Richtung auch vom Primärstrom $i_1$ durchflossen werden, vergleiche die Strompfeile $i_1$ (heller Pfeilkopf) und vergleiche die Flußrichtung $\phi_1$, welche im Magnetschenkel m4 nach unten gerichtet und ebenfalls durch einen umrandeten Pfeil dargestellt ist. An der Schaltstelle 101 (Lötstützpunkt oder Klemme — Fig. 1) erfolgt die Einspeisung mit dem Primärstrom $2_{l1}$, welcher sich dann als Teilstrom $i_1$ auf je einen der beiden Wicklungszweige A1 und A2 der Primärwicklung $w_1$ aufteilt (Fig. 1). Im Falle des in Fig. 3 linken Wicklungszweiges A1 nimmt der Primärstrom seinen Verlauf vom unteren Wicklungsanfang a11 bis zum oberen Wicklungsende a12, im Falle des zweiten Wicklungszweiges A2 der Primärwicklung (Fig. 3, rechter Magnetschnekel m2) nimmt der Primärstrom $i_1$ seinen Verlauf vom oberen Wicklungsanfang a21 bis zum unteren Wicklungsende a22. Man erkennt daraus, daß der zweite Zweig A2 der Primärwicklung von oben betrachtet in einer Links- bzw. Gegenzeiger-Spirale absteigend um den Magnetschenkel m2 herum gewunden und auch in dieser Richtung vom Primärstrom $i_1$ durchflossen. Infolgedessen ergibt sich hier eine Flußrichtung des Flußes $\phi_1$, welche mit derjenigen im linken Magnetschenkel m4 gleichgerichtet ist.

Die beiden Zweige B1 und B2 der Sekundärwicklung $w_2$ sind, wie bereits erwähnt, in Reihe zueinander geschaltet. Beginnend beim oberen Wicklungsanfang bzw. Anschlußpunkt b11 ist der mit ausgezogenen Linien dargestellte erste Wicklungszweig B1 der Sekundärwicklung $w_2$ — bei Betrachtung von oben — in einer Links- bzw. Gegenzeiger-Schraube um den Magnetschenkel m4 herumgewickelt und auch in dieser Richtung vom Sekundärstrom $i_2$ (schwarz ausgezogene Strompfeile) durchflossen bis zum Anschlußpunkt bzw. Ende b12 des ersten Wicklungszweiges B1, von wo aus dann (vergleiche Fig. 1) eine Herumführung des Leiters $1_2$ außen an dem Stützisolator 1.1 bis hin zum Wicklungsfixpunkt bzw. -anfang b21 für den zweiten Wicklungszweig B2 der Sekundärwicklung $w_2$ erfolgt, welcher im unteren Bereich des Magnetschenkels m2 liegt (siehe Fig. 3). Von hier aus ist dann der zweite Wicklungszweig B2, bei Betrachtung von unten, in Links- bzw. Gegenzeiger-Schrauben aufsteigend um den Magnetschenkel m2 herumgewunden und auch in dieser Richtung vom Sekundärstrom $i_2$ (schwarze Pfeile) durchflossen bis zum Wicklungsende bzw. Anschluß- und Fixpunkt b22. Die zugehörige Richtung des Flusses $\phi_2$ ist durch die schwarz ausgezogenen Pfeile symbolisiert. D.h., die Richtungen der Flüsse $\phi_2$ im linken Schenkel m4 und im rechten Schenkel m2 stimmen überein; sie sind jeweils den Richtungen der Flüsse $\phi_1$ entgegengerichtet. Durch die gestrichelte Linie zwischen den Anschlußpunkten a11 und a21 ist in Fig. 3 die Überleitung des Wicklungs-

leiters $1_1$ auf der Außenseite des Stützisolators 1.2 angedeutet (diese Höhenüberbrückung ist aus der Darstellung der Fig. 1 nicht erkennbar).

Die Mittel H zur Halterung des Kerns M1 und der beiden Stützisolatoren 1.1, 1.2 auf einer Grundplatte 3 innerhalb eines die dielektrische Flüssigkeit enthaltenden, in Fig. 1 bis 3 jedoch nicht dargestellten Behälters, Tanks, Kessels o.dgl. bestehen aus einem deckseitigen Haltejoch 4 und aus das Haltejoch 4 gegen die Deckseite des Kerns M1 und damit letzteren gegen die Grundplatte 3 drückenden Zugstangen 6, welche die insbesondere einen rechteckigen Grundriß aufweisende Grundplatte 3 und das etwas schmälere, aber ebenfalls einen Rechteck-Grundriß aufweisende Haltejoch 4 in Bohrungen 7 durchdringen und an ihren beiden, mit Gewinde versehenen Enden mittels Spannmuttern 8 gespannt sind. Die Spannmuttern 8 sind mit Unterlegscheiben 9 versehen. Die Zugstangen 6 können insbesondere als Dehnschrauben ausgebildet sein, wobei dann eine gesonderte Verdrehsicherung entfallen kann. Es ist ferner möglich, die Bohrungen 7 in der Grundplatte 3 als Gewindebohrungen oder Gewindesacklöcher auszuführen, wobei dann die unteren Muttern 8 entfallen können. Das Haltejoch 4 besteht aus einem diamagnetischen Material, z.B. Messing oder aus einem geeigneten Kunststoff, z.B. GFK (glasfaserverstärkter Kunststoff), damit sich keine Wege für parasitäre Nebenflüsse ergeben. Die Zugstangen oder Zuganker 6 können aus korrosionsbeständigem Stahl bestehen. Die Grundplatte 3 besteht ebenfalls aus isolierendem Material, z.B. Pertinax oder Acrylglas.

Die plattenförmigen Stützisolatoren 1.1, 1.2 sind in dem angegebenen dritten Mindestabstand c vom Kern M1 planparallel zu dessen Breitseiten angeordnet und en der Grundplatte 3 befestigt, z.B. durch Verkleben im Bereich der durch Schraffur gekennzeichneten Seitenflächen 3.1 der Grundplatte 3 (Fig.3). An ihren oberen Enden können die Stützisolatoren 1.1, 1.2 noch durch nicht dargestellte Verbindungsstege miteinander verbunden sein, so daß ein weitgehend starres Isolator-Gebilde entsteht. Das Material für die Stützisolatoren 1.1, 1.2 ist ein hochwertiger Isolator, z.B. Pertinax oder Acrylglas. Grundsätzlich wäre es möglich, auf nur einer Seite oder Breitseite des Magnetkerns M1 einen plattenförmigen oder anders gestalteten Stützisolator 1 vorzusehen, der dann die Wicklungsenden oder Wicklungsanfänge der kleinsten Wicklungseinheiten $w_0$ fixieren müßte; die dargestellte Ausführung mit zwei Stützisolatoren, davon je einer Breitseite des Kerns M1 zugeordnet, ist jedoch vielseitiger und erleichtert die Anschlußverbindung und das Verschalten der einzelnen kleinsten Wicklungseinheiten, deren steigende Gesamtzahl pro Kern eine entsprechend größere Anzahl unterschiedlicher Übersetzungsverhältnisse herzustellen gestattet. Es können dabei durch gemischte Reihen- und Parallelschaltung sowohl primär wie sekundär Übersetzungsverhältnis und Windungszahl variiert werden. Durch entsprechende Kombination von Wicklungselementen lassen sich also wie bei konventionellen Transformatoren mit mehreren Wicklungen unterschiedlich Spannungen bei unterschiedlichen Innenwiderständen erzeugen. Bei dem in Fig. 1 bis 3 dargestellten Beispiel beträgt, wie bereits erwähnt, die Primärwindungszahl $n_1 = 2$, die Sekundärwindungszahl $n_2 = 4$ und demnach das Übersetzungsverhältnis $ü = n_2/n_1 = 2$.

Aus dem vereinfachten Beispiel nach Fig. 1 bis Fig. 3 läßt sich bereits das Prinzip der Kombination kleinster Wicklungseinheiten $w_0$ erkennen. Diese bestehen jeweils aus wenigstens je einer Unter- und Oberspannungswindungsanordnung im Form der Zweige A1, B1 bzw. A2, B2. Diese Zweige mit ihren Primärwindungen $w_{01}$ und mit ihren Sekundärwindungen $w_{02}$ umschlingen in Achsrichtung der Windungsspirale gesehen mit dem ersten Mindestabstand a zueinander benachbart und parallel zueinander verlaufend den zugehörigen Magnetschenkel m4 bzw. m2. Eine Mehrzahl derartiger mit ihren Windungen $w_{01}$, $w_{02}$ parallel gewickelter kleinster Wicklungseinheiten $w_0$ ist mit ihren Windungsenden (bzw. Windungsanfängen) a11 bis a22, b11 bis b22 zu den Stütz- und Anschlußpunkten 2 an den Stützisolatoren 1.1, 1.2 geführt. An den Stütz- und Anschlußpunkten 2 der Stützisolatoren 1.1, 1.2 bzw. in der Nähe derselben ist nun die interne Verschaltung der wählbaren Anzahl von Wicklungseinheiten $w_0$ zur Ober- und Unterspannungswicklung $w_2$ bzw. $w_1$ zur Erzielung des gewünschten Übersetzungsverhältnisses ü vorgenommen.

Das soeben geschilderte Prinzip der Anordnung einer Mehrzahl gleichartiger kleinster Wicklungseinheiten und ihrer Verschaltung zur Primär- und Sekundärwicklung wird im folgenden anhand des zweiten Ausführungsbeispiels nach Fig. 4 nochmals erläutert. Auch dort ist ein Rechteckkern mit den beiden einander gegenüberliegenden kürzeren Schenkeln m1, m3 und den einander gegenüberliegenden längeren Schenkeln m2, m4 vorgesehen mit der mittigen Fensteraussparung 5. Jeder der beiden längeren Schenkel m2, m4 trägt drei kleinste Wicklungseinheiten $w_0$, deren Primärwindungen $w_{01}$ und deren Sekundärwindungen $w_{02}$ jeweils bifilar um die Magnetschenkel und mit gegenseitigem Abstand a sowie mit Abstand b zu den Magnetschenkeln um letztere gewunden sind. Jede Wicklungseinheit $w_0$ weist zwei Primärwindungen $w_{01}$ und zwei Sekundärwindungen $w_{02}$ auf, und die pro Wicklungseinheit $w_0$ in Reihe zueinander liegenden Primärwindungen $w_{01}$ werden wieder Wicklungszweige bzw. abgekürzt "Zweige" genannt und im Falle der primärseitigen Wicklungszweige mit A1 bis A6 bezeichnet und im Falle der sekundärseitigen Wicklungszweige mit B1 bis B6. Bei zwei der kleinsten Wicklungseinheiten $w_0$ des Schenkels m4 sind die Windungen nicht im Detail dargestellt; es versteht sich, daß diese gleichartig zu den übrigen Wicklungseinheiten angeordnet sind. Der primärseitige Wicklungszweig A1 hat die beiden Wicklungsenden a11, a12 und der bifilar zu ihm angeordnete sekundärseitige Wicklungszweig B1 hat die beiden Wicklungsenden (bzw. Anfänge) b11, b12. Entsprechend ist die Bezeichnung für alle übrigen fünf kleinsten Wicklungseinheiten $w_0$ vorgenommen, so daß also die kleinste Wicklungseinheit $w_0$, zu welcher die Wicklungszweige A6 und B6 gehören, die primärseitigen Wicklungsenden a61, a62 und die sekundärseitigen Wicklungsenden b61 und b62 hat. Für die beiden unteren Wicklungseinheiten sind die Strompfeile $i_1$ innerhalb der Primärwindungen $w_{01}$ (helle Pfeile) und die Strompfeile $i_2$ innerhalb der Sekundärwindungen $w_{02}$ (schwarze Pfeile) eingezeichnet. Man erkennt, bei Betrachtung von unten, daß die Primärwindungen $w_{01}$ des linken Schenkels m4 als aufsteigende Rechtsschrauben verlegt und in diesem Sinne auch vom Primärstrom $i_1$ durchflossen werden, so daß sich nach der Schraubenregel die Flußrichtung $\phi_1$ ergibt (heller Pfeil), wogegen die sekundären Windungen $w_{02}$ bei Betrachtung von oben als absteigende Rechtsschrauben verlegt sind und auch in diesem Sinne vom Sekundärstrom $i_2$ durchflossen werden, so daß sich die mit schwarzen (ausgezogenem) Pfeil dargestellte Flußrichtung $\phi2$, entgegengesetzt zur Flußrichtung $\phi1$, ergibt. Auf dem rechten Schenkel m2 sind die Primär- und Sekundärwindungen $w_{01}$, $w_{02}$ so verlegt und orientiert, daß die mit ihnen verketteten Flüsse $\phi1$ und $\phi2$, die sich aufgrund der in ihnen fließenden Ströme $i_1$ und $i_2$ ergeben, im Umlaufsinne des Kerns M2 gleichgerichtet sind zu den Flüssen im linken Schenkel m4, was sich ohne weiteres bei Betrachtung der rechten Hälfte von Fig. 4 und Anwendung der Schraubenregel ergibt. Die Anordnung nach Fig. 4 ist naturgemäß wesentlich vielseitiger als die nach Fig. 1 bis 3, weil z.B. primärseitig die Zweige A1 bis A6 insgesamt oder in zwei Gruppen oder in drei Gruppen zueinander parallel geschaltet werden können; dementsprechend können sekundärseitig die Zweige B1 bis B6 alle insgesamt zueinander in Reihe geschaltet werden oder z.B. in drei Gruppen zu je zwei Paaren oder in zwei Gruppen zu je drei Paaren. Es läßt sich damit das gewünschte ubersetzungsverhältnis ü einstellen, ebenso läßt sich der Impulsübertrager als Spannungs- oder als Stromtransformator betreiben. Die Wicklungsenden a11 bis a62 und b11 bis b62 werden wieder durch in Fig. 4 nicht dargestellte Ausnehmungen oder Bohrungen von Stützisolatoren geführt und darin fixiert, wobei an der Außenseite wieder entsprechende Anschlußklemmen anzuordnen wären (nicht dargestellt).

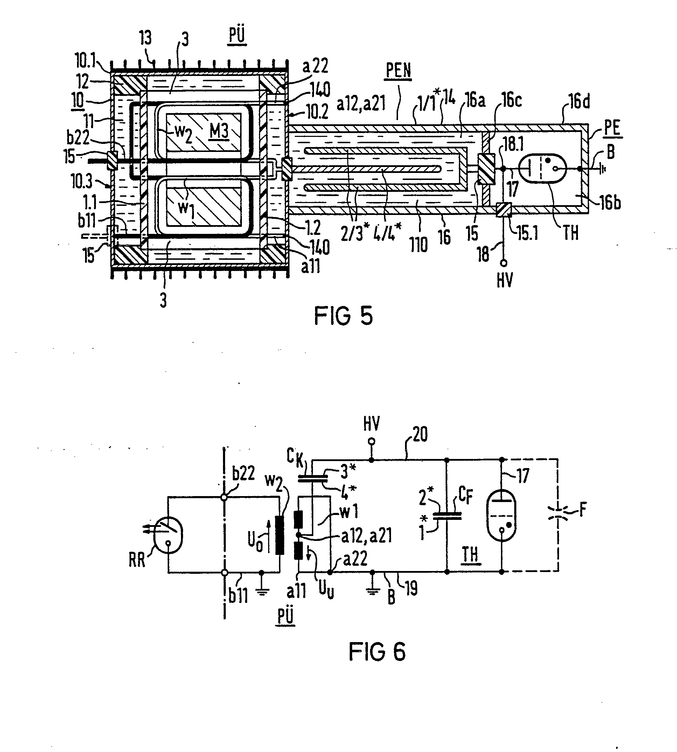

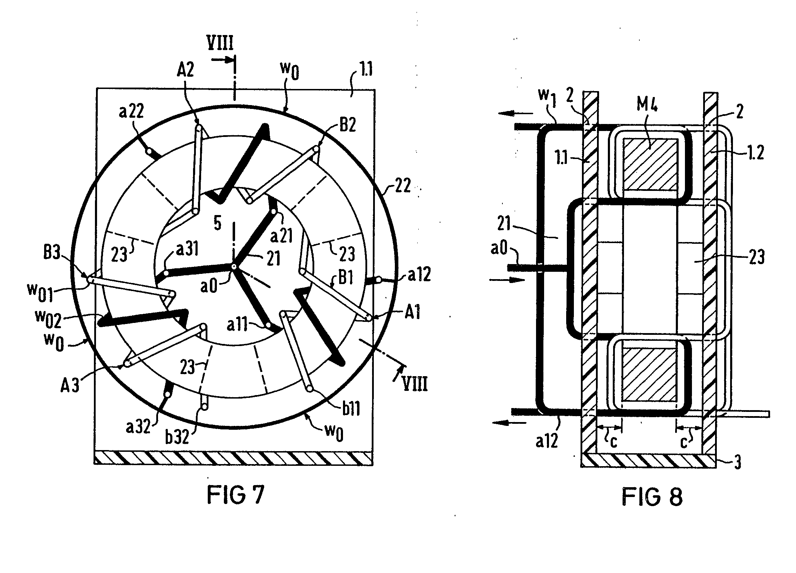

Beim dritten Ausführungsbeispiel nach Fig. 5 ist der Impulsübertrager der Bauart nach Fig. 1 bis 3 bzw. Fig. 4 oder nach der noch zu erläuternden Ringkern-Bauart nach Fig. 7 und 8 in einem hermetisch gekapselten Tank 10 untergebracht, welcher mit Transformatorenöl oder mit fluoriertem Kohlenwasserstoff als flüssiges, kühlendes Dielektrikum 11 ausgefüllt ist. Für das konkrete Ausführungsbeispiel nach Fig. 5 sei angenommen, daß der Kern M3 ein Rechteckkern ist, welcher mittels durchbrochener Eckleisten 12, von denen in der Darstellung nach Fig. 5 lediglich vier ersichtlich sind, mittig innerhalb des Tanks 10 gehaltert ist, und zwar über eine obere und eine untere Grundplatte, nicht dargestellte Zuganker o.dgl. und die beiden auf je einer Breitseite des Kerns M3 liegenden Stützisolatoren 1.1, 1.2. Außer den vier dargestellten Eckleisten können der quader- oder würfelförmigen Konfiguration des Impulsübertragers entsprechend allen seinen zwölf Kanten weitere Eckleisten oder Stützklötze zugeordnet werden (nicht dargestellt). Die Durchbrechungen innerhalb der Eckleisten 12 sind deshalb vorzusehen, damit die Konvektionsströmung des Dielektrikums 11 nicht behindert wird. Der Abführung der Verlustwärme dienen weiterhin am Außenumfang 10.1 des Tanks 10 angeordnete, schematisch angedeutete Kühlrippen 13. Bei Verwendung von dünnflüssigen fluorierten Kohlenwasserstoffen reicht die Eigenkonvektion zur Wärmeabfuhr im allgemeinen aus, während sich bei Verwendung von Transformatoröl eine Zwangskonvektion mittels einer Umwälzpumpe empfiehlt über entsprechende Öl-Zu- und Abfuhr-Leitungen (nicht dargestellt).

Der Pulsübertrager nach Fig. 5 ist insgesamt mit PÜ bezeichnet; er ist mit einem Pulsgenerator PE zu einer Baueinheit integriert. D.h., der Metalltank 10 des Pulsübertragers PÜ ist mit dem metallischen Gehäuse 14 des Pulsgenerators PE metallisch leitend und mechanisch fest verbunden. Bei Vergleich von Fig. 5 und Fig. 6 erkennt man, daß die Wicklungsanschlüsse a11 und a22 der Primärwicklung $w_1$ metallisch leitend mit der Stirnwand 10.2 des Tanks 10 kontaktiert sind (Kontaktstellen 140) und daß der hochliegende Anschluß b22 der Sekundärwicklung $w_2$ hochspannungsisoliert mittels der Hochspannungs-Durchführung 15 durch die gegenüberliegende Stirnwand 10.3 nach außen hindurchgeführt ist. Das andere Wicklungsende b11 der Sekundärwicklung $w_2$ kann im Falle der Erdung ebenfalls metallisch leitend mit der Stirnwand 10.3 kontaktiert sein, oder aber, wenn die Sekundärwicklung nicht geerdet wird, ebenfalls durch einen Durchführungsisolator 5 nach außen hochspannungsgesichert hindurchgeführt sein. Deshalb ist die Durchführung 15 des Wicklungsanschlusses b11 gestrichelt.

Durch Vergleich von Fig. 5 und Fig. 6 erkennt man weiterhin, daß der Pulsgenerator PE eine Blümlein-Schaltung aufweist; sein rechteckföriges, metallisches Gehäuse 14 ist, wie erwähnt, mit dem Tank 10 verbunden, es ist in zwei Kammern 16a und 16b unterteilt. Die Kammer 16a enthält die metallischen Kondensatorplatten 2/3* in U-Form und die zwischen den U-Schenkeln angeordnete Kondensatorplatte 4/4*, wobei das äußere metallische Gehäuse einen Kondensatorbelag bzw. die Kondensatorplatte 1/1* bildet. Diese Bezeichnungen 1/1*, 2/3* und 4/4* koinzidieren mit den Bezeichnungen für die Beläge 1* und 2* des ersten Bandleiterkondensators $C_F$ und die Beläge 3* und 4* des zweiten Bandleiterkondensators $C_K$ aus Fig. 6. Die Blümlein-Schaltung ist für pulserzeugende Netzwerke an sich bekannt und z.B. in (2) oder in (10) dargestellt und näher beschrieben.

Als schnelle Hochspannungsschaltstrecke dient ein Thyratron TH, dessen Anode 17 gemäß Fig. 5 und 6 mit dem gemeinsamen Belag 2/3* der beiden Bandleiterkondensatoren $C_K$ und $C_F$ verbunden ist, und zwar über eine weitere Hochspannungsdurchführung 15 in der Trennwand 16c; die Kathode ist dagegen mit der metallischen Gehäusewand 16d der Kammer 16b kontaktiert, und letztere ist wiederum geerdet, siehe schematisch eingezeichneten Anschluß B des Erdpotentials. Die Hochspannung HV wird über eine Hochspannungsleitung 18 mittels der weiteren Durchführung 15.1 durch die metallische Wand 16d der Kammer 16b hindurchgeführt und an die Anode bei 18.1 angeschlossen.

Das in der Kammer 16a enthaltende und durch die Gehäusewand 16 gebildete pulserzeugende Netzwerk PEN des Pulsgenerators PE arbeitet mit Wasser oder einer Ethylen-Glykol-Wassermischung oder auch mit reinem Ethylen-Glykol als Dielektrikum 110 und wird aus einer nicht dargestellten Pulsaufladeeinrichtung aufgeladen. Die metallischen Kammerwände 16d der das Schaltelement (Thyratron TH) aufnemenden Kammer 16b wirken als Stromrückführung.

In Fig. 6 ist parallel zum Schaltelement TH noch gestrichelt eine allgemeine schnelle Hochspannungs-Schaltstrecke in Form einer Funkenstrecke F angedeutet, um damit zum Ausdruck zu bringen, daß der Pulsübertrager PÜ auf die Verwendung von Thyratrons nicht beschränkt ist. In dieser Fig. 6 ist der Anschluß an das Erdpotential wieder mit B und an die Hochspannungsquelle mit HV bezeichnet, ferner die normalerweise auf Erdpotential stehende ("untere") Schiene mit 19 und die normalerweise auf Hochspannungspotential liegende ("obere") Schiene mit 20. Im vorliegenden Fall ist als Bürde oder Last der Sekundärwicklung $w_2$ des Pulsübertragers PÜ eine Röntgenblitzröhre RR vorgesehen, wobei das Übersetzungsverhältnis ü z.B. 3 beträgt, d.h., ein an der Primärwicklung $w_1$ entstehender Hochspannungsimpuls von z.B. 30 kV wird durch den Pulsübertrager auf den dreifachen Wert von etwa 90 kV herauftransformiert; dieser Hochspannungsimpuls wird der Röntgenblitzröhre RR zugeführt, welche Röntgenimpulse hoher Intensität im Submikrosekundenbereich erzeugt.

In Fig. 7 und 8 ist ein Pulsübertrager mit Ringkern M4 dargestellt mit drei kleinsten Wicklungseinheiten $w_0$ zu je zwei Windungen $w_{01}$ und $w_{02}$. Der in der Projektion der Fensteröffnung 5 des Ringkerns M4 angeordnete sternförmige Leiter 21 ist an die Anfänge a11, a21, a31 der Primärzweige A1, A2, A3 angeschlossen, der äußere ringförmige Leiter 22 ist an die Enden der jeweiligen Primärzweige bei a12, a22 und a32 angeschlossen. Der Sternpunkt der Primärwicklung $w_1$ ist mit a0 bezeichnet. Man erkennt, daß alle drei Primärzweige A1, A2, A3 zueinander parallel geschaltet sind. Die Sekundärzweige B1, B2, B3, deren Windungen $w_{02}$ wieder bifilar zu den Windungen $w_{01}$ der Primärwicklung $w_1$ angeordnet sind, sind zueinander in Reihe geschaltet; der Wicklungsanfang der Sekundärwicklung $w_2$ ist mit b11 und das Wicklungsende mit b32 bezeichnet. Mit den drei kleinsten Wicklungseinheiten $w_0$, jeweils bestehend aus den primär- und sekundärseitigen Wicklungszweigen A1, B1; A2, B2; A3, B3, wobei diese Wicklungszweige je zwei Windungen $w_{01}$ bzw. $w_{02}$ umfassen, wird ein Übersetzungsverhältnis von 3 realisiert.

Es sind wieder zwei plattenförmige Stützisolatoren 1.1, 1.2 im Abstand c von den Breitseiten des Ringkers M4 angeordnet und auf geeignete Weise mit der Grundplatte 3 und miteinander verbunden, wobei auch hier entsprechend der Darstellung nach Figuren 1 und 3 der Transformatortank, das flüssige Dielektrikum, die Hochspannungsdurchführungen weggelassen sind; es versteht sich, daß diese auf die anhand der Figur 5 dargestellte Weise ausgeführt sein können. Zwischem dem Ringkern M4 und den Stützisolatoren 1.1, 1.2 sind Abstandshalteblöcke 23 aus isolierendem Material eingefügt, welche, vergleiche Fig. 7, in den Lücken zwischen den kleinsten Wicklungseinheiten $w_0$ angeordnet sind. Die Abstandshalteblöcke 23 sind in Fig. 7 nur schematisch angedeutet.

Mit dem Ringkern-Pulsübertrager nach Figuren 7 und 8 lassen sich Pulsgeneratoren mit rotationssymmetrischen pulserzeugenden Netzwerken aufbauen und geringstmögliche Anschlußinduktivitäten an einer zylinderförmigen Stromrückführung am Schaltelement TH bzw. F (vergleiche Fig. 5 und 6) verwirklichen.

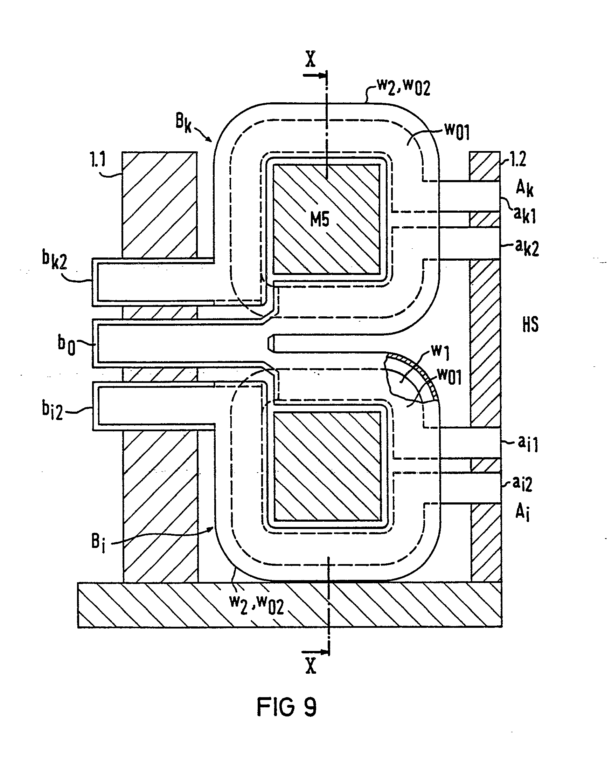

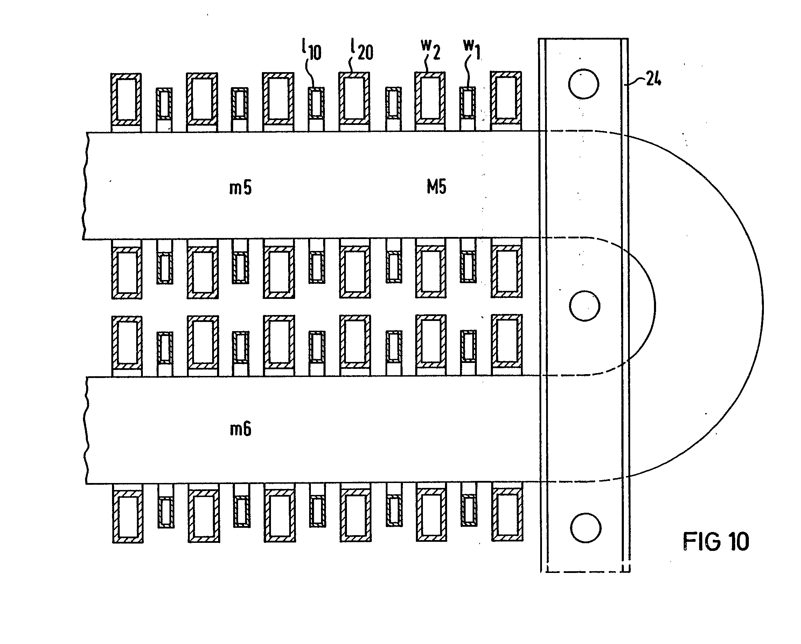

Bei dem als fünftes Ausführungsbeispiel in Fig. 9 und 10 vereinfacht dargestellten Stromtransformator nach der Erfindung werden die Enden $a_{i1}$, $a_{i2}$ bzw. $a_{k1}$, $a_{k2}$ der beiden primären Wicklungszweige $A_i$, $A_k$ vom Stützisolator 1.2 getragen. Die primären Einzelwindungen $w_{01}$ sind allesamt in Reihe geschaltet (die Schaltverbindungen sind nicht dargestellt). Die Hochstromsekundärwicklung $w_2$ mit ihren Windungen $w_{02}$ und ihren sekundärseitigen Wicklungszweigen $B_i$ und $B_k$ wird vom Stützisolator 1.1 getragen. Die Hochstromsekundärwicklung $w_2$ kann kleinste Wicklungseinheiten umfassen, welche zueinander alle parallel geschaltet sind oder die zumindest gruppenweise zueinander parallel geschaltet sind.

Fig. 9 in Verbindung mit Fig. 10 zeigt, daß der Ovalkern M5 als langgestrecktes Oval aufgebaut ist. Dabei empfiehlt sich eine langgestrecktes Oval vorzugsweise aus hochpermeablem Material in der Ausführung als Schnittbandkern. Dieser Schnittbandkern M5 wird von einem massiven Stahlträger 24 ortsfest in bezug auf die Wicklungen $w_1$, $w_2$ gehalten. Diese starre Halterung ist wichtig wegen der hohen Stromkräfte. Die sekundärseitigen Stromanschlüsse sind in Fig. 9 mit $b_{i2}$ (Wicklungsausgang) für den unteren Schenkel m6 und mit $b_{k2}$ für den Wicklungsausgang der Sekundärwicklungsteile am oberen Schenkel m5 bezeichnet, wogegen $b_0$ einen gemeinsamen Anschluß für die Stromzuführung bzw. Stromableitung der Sekundärwicklung $w_2$ bezeichnet. Die Stromanschlüsse $b_{i2}$, $b_{k2}$ und $b_0$ gestatten einen überwiegend bifilaren Anschluß an die Last über Streifenleitungen (nicht dargestellt). Mit dieser Stromtransformator-Anordnung lassen sich ohmsche Widerstände in der Sekundärwicklung $w_2$ von einigen µOhm und Stromimpulse von einigen Megaampère realisieren.

Die aus rechteckigen Leiterrohren $l_{20}$ aufgebaute Hochstromwicklung kann mit einer Kühlflüssigkeit zur Abfuhr der Kupferverluste durchströmt werden (Fig. 10), und zwar je nach Leistung seriell, in Reihenparallelschaltung oder mit den Kühlpfaden jeder einzelnen Windung parallel zueinander. Das entsprechende kann auch für die primärseitige Hochspannungswicklung $w_1$ verwandt werden, deren hohle Kupferleiter mit $l_{10}$ bezeichnet sind. Bei der in Fig. 9 und 10 dargestellten Bauform eines Strom- bzw. Hochstromtransformators erfolgt mithin die Kühlung der primärseitigen und sekundärseitigen Wicklung $w_1$, $w_2$ sowohl von innen mit Kühlflüssigkeit (insbesondere Wasser), aber auch von außen durch die Kühlung des Dielektrikums, welches bei größeren Leistungen und/oder bei dickflüssigerem Dielektrikum von einer Pumpe umgewälzt werden kann.

# EP 0 215 286 B1

Literaturverzeichnis

(1) V. E. Merchant, H. J. Seguin, J. Dow Rev. Sci. Instr. 50 (9), Sept. 1979. S. 1151—1153

(2) EP—A1—0 024 576

(3) M. Matera, R. Buffa, G. Conforti et al Rev. Sci. Instr. 54 (6), June 1983, S. 716—718

(4) R. Germer. J. Physics E 12, 1979, S. 336—350

(5) H. Shields, A.J. Alcock Optics Communications, Vol. 42, No. 2, S. 128—132

(6) J. I. Levatter and Z. Li Rev. Sci. Instr. 52 (11), Nov. 1981, S. 1651—1654

(7) J. I. Levatter, R. L. Sandstrom, J. H. Morris 4th IEEE Intern Pulsed Power Conference, Albuquerque Conference Report, page 755—757

(8) J. D. Galbraith 3d IEEE Pulsed Power Conference Report 11.5, S. 238—240

(9) Zeitschrift "Scientific American", April 1980, S 84—96.

(10) DE—A1—33 23 614

**Patentansprüche**

1. Hochleistungs-Impulsübertrager für kurze Impulse hoher Spannung und/oder hoher Ströme, vorzugsweise für Schaltkreise von Hochleistungslasern (L), bestehend aus

wenigstens einem Magnetkern (M1 bis M5), dessen in sich geschlossene Magnetschenkel um ein zentrales Fenster (5) herum angeordnet sind, so daß die beiden Breitseiten des Magnetkerns achsnormal zur Fensterachse (5.0) verlaufen,

und mindestens je einer, den Magnetkern (M1 bis M5) umschlingenden und mit dem Magnetkern sowie miteinander verketteten Unter- und Oberspannungswicklung ($w_1$, $w_2$), wobei die elektrisch isolierten, metallischen Leiter ($l_1$, $l_2$; $l_{10}$, $l_{20}$) für die Windungen ($w_{01}$, $w_{02}$) der Unter- und der Oberspannungswicklung weitgehend bifilar zueinander geführt sind dadurch gekennzeichnet,

daß die Windungen ($w_{01}$, $w_{02}$) von Unter- und Oberspannungswicklung ($w_1$, $w_2$) freitragend mit einem ersten Mindestabstand (a) der Windungen untereinander und mit einem zweiten Mindestabstand (b) zu dem von ihnen umschlungenen Magnetkern (M1 bis M5) sowie bifilar ineinandergeschachtelt angeordnet sind;

daß benachbart zu mindestens einer der Seiten des Magnetkerns in einem dritten Mindestabstand c > (b + d) Stützisolatoren (1.1, 1.2) angeordnet sind, wobei b den zweiten Mindestabstand und d die Leiterstärke der Windungen ($w_{01}$, $w_{02}$) bedeutet und wobei in Ausnehmungen (2) der Stützisolatoren (1.1, 1.2) zumindest die Wicklungsenden (a11 bis a62; b11 bis b62; $a_{l1}$ bis $a_{k2}$, $b_{l2}$, $b_0$, $b_{k2}$) der Unter- und der Oberspannungswicklung spielfrei festgelegt sind;

daß Unter- und Oberspannungswicklung ($w_1$, $w_2$) und mindestens die von ihnen umschlungenen Partien (m2, m4, m5, m6) des Magnetkerns (M1 bis M5) und die von ihnen durchdrungenen Partien der Stützisolatoren (1.1, 1.2) in eine isolierende, kühlende dielektrische Flüssigkeit (11) eintauchen;

daß die Wicklungsleiter ($l_1$, $l_2$; $l_{10}$, $l_{20}$) der Unter- und der Oberspannungswicklung ($w_1$, $w_2$) mit ihren Oberflächen einen hohen Wärmeübergangskoeffizienten ($\alpha$) in bezug auf die dielektrische Flüssigkeit aufweisen;

und daß Mittel (4, 6, 7, 8, 9) zur Halterung des Magnetkerns (M1 bis M5) und der Stützisolatoren (1.1, 1.2) auf einer Grundplatte (3) innerhalb eines die dielektrische Flüssigkeit (11) enthaltenden Behälters (10) sowie Hochspannungsdurchführungen (15) für die Anschlußenden der Wicklungsleiter ($l_1$, $l_2$; $l_{10}$, $l_{11}$) an den Behälterwandungen (10.2, 10.3) vorgesehen sind.

2. Hochleistungs-Impulsübertrager nach Anspruch 1, dadurch gekennzeichnet, daß die kleinste Wicklungseinheit ($w_0$) aus wenigstens je einer Unter- und Oberspannungswindungsanordnung in Form von Wicklungs-Zweigen (A1 bis A6, B1 bis B6; $A_l$, $A_k$; $B_l$, $B_k$ besteht und die einander benachbarten Windungen ($w_{01}$, $w_{02}$) der beiden Wicklungszweige in Achsrichtung der Windungsspirale gesehen mit dem ersten Mindestabstand (a) zueinander benachbart und parallel zueinander verlaufend den zugehörigen Magnetschenkel umschlingen,

daß eine Mehrzahl derartiger parallel gewickelter kleinster Wicklungseinheiten ($w_0$) mit ihren Windungsenden zu Stütz- und Anschlußpunkten (2) an den Stützisolatoren (1.1, 1.2) geführt sind

und daß an den Anschlußpunkten (2) der Stützisolatoren (1.1, 1.2) die interne Verschaltung einer wählbaren Anzahl von Wicklungseinheiten ($w_0$) zur Unter- und Oberspannungswicklung ($w_1$, $w_2$) zur Erzielung des gewünschten Übersetzungsverhältnisses (ü) vorgenommen ist.

3. Hochleistungs-Impulsübertrager nach Anspruch 1 oder 2, dadurch gekennzeichnet, daß jedem der bewickelten Magnetkernschenkel der Magnetkerne (M1 bis M5) oder jeder der beiden Breitseiten der bewickelten Magnetkerne je ein Stützisolator (1.1, 1.2) zugeordnet ist.

4. Hochleistungs-Impulsübertrager nach einem der Ansprüche 1 bis 3, dadurch gekennzeichnet, daß die Stützisolatoren (1.1, 1.2) plattenförmig sind.

5. Hochleistungs-Impulsübertrager nach Anspruch 3, dadurch gekennzeichnet, daß die kleinsten Wicklungsteileinheiten in Form der Wicklungszweige (Al, A2) der Unterspannungswicklung ($w_1$) mit ihren Windungsenden (a11, a12, a21, a22) an einem Stützisolator (1.2) und die kleinsten Wicklungsteileinheiten in Form der Zweige (Bl, B2) der Oberspannungswicklung ($w_2$ mit ihren Wicklungsenden (b11, b12, b21, b22) an dem anderen Stützisolator (1.1) abgestützt und verschaltet sind.

6. Hochleistungs-Impulsübertrager nach einem der Ansprüche 1 bis 5, dadurch gekennzeichnet, daß

10

zumindest die den Hochstrom führende Wicklung ($w_2$ bzw. $w_1$) aus Hohlleiter-Windungen mit Hohlleitern ($l_{20}$) aufgebaut ist, welche mittels einer Kühlflüssigkeit auch von innen kühlbar sind.

7. Hochleistungs-Impulsübertrager nach Anspruch 6, dadurch gekennzeichnet, daß sowohl die den Hochstrom führende, aus parallel geschalteten Wicklungsteileinheiten ($B_l$, $B_k$) bestehende Sekundär-wicklung ($w_2$) als auch die die Hochspannung führende, aus zu einander in Reihe geschalteten Wicklung-steileinheiten ($A_l$, $A_k$) bestehende Primärwicklung ($w_1$) aus Hohlleiterwindungen mit Hohlleitern ($l_{20}$, $l_{10}$) aufgebaut sind.

8. Hochleistungs-Impulsübertrager nach einem der Ansprüche 1 bis 7, dadurch gekennzeichnet, daß er als Rechteckkern-Übertrager ausgebildet ist (Doppel-U- oder Ul-Kernübertrager).

9. Hochleistungs-Impulsübertrager nach einem der Ansprüche 1 bis 7, dadurch gekennzeichnet, daß er als Ringkern-Übertrager ausgebildet ist (Fig. 7, 8).

10. Hochleistungs-Impulsübertrager nach einem der Ansprüche 1 bis 7, dadurch gekennzeichnet, daß er als Ovalkern-Übertrager ausgebildet ist (Fig. 9, 10).

11. Hochleistungs-Impulsübertrager nach einem der Ansprüche 1 bis 10, dadurch gekennzeichnet, daß die aus einem gut leitfähigem Material mit einem spezifischen Widerstand von

$$0{,}016 \leq \rho \left[ \frac{\Omega \cdot mm^2}{m} \right] \leq 0{,}029$$

bei 20°C bestehenden Wicklungsleiter an ihrer äußeren Oberfläche eine Struktur aufweisen, welche in der Bandbreite metallisch blank bis hin zu einer dünnen Oxidhaut bzw. einem dünnen Schutzlack liegt.

**Revendications**

1. Transformateur d'impulsions à haute puissance pour courtes impulsions de haute tension et/ou de courants élevés, de préférence pour circuits de lasers de haute puissance (L), comprenant

au moins un noyau magnétique (M1 à M5) dont les branches magnétiques, formant un circuit magnétique fermé en lui-même, sont disposées autour d'une fenêtre centrale (5), de manière que les deux grands côtés du noyau soient perpendiculaires à l'axe (5.0) de la fenêtre,

et au moins un enroulement basse tension et un enroulement haute tension ($w_1$, $w_2$) qui entourent le noyau magnétique (M1 à M5) et sont enchaînés entre eux et avec le noyau magnétique, les conducteurs métalliques ($l_1$, $l_2$; $l_{10}$, $l_{20}$) électriquement isolés pour les spires ($w_{01}$, $w_{02}$) des enroulements basse tension et haute tension étant guidés les uns par rapport aux autres suivant une disposition sensiblement bifilaire, caractérisé en ce

que les spires ($w_{01}$, $w_{02}$) des enroulements basse tension et haute tension ($w_1$, $w_2$) ne sont pas soutenues et ont une disposition bifilaire mutuellement imbriquée, avec une première distance minimale (a) des spires entre elles et avec une deuxième distance minimale (b) par rapport au noyau magnétique (M1 à M5) entouré par eux;

que des isolateurs supports (1.1, 1.2) sont disposés à proximité d'au moins l'un des côtés du noyau magnétique, à une troisième distance minimale c > (b + d), b étant la deuxième distance minimale et d étant l'épaisseur des conducteurs des spires ($w_{01}$, $w_{02}$), au moins les extrémités (a11 à a62; b11 à b62; $a_{l1}$ à $a_{k2}$, $b_{l2}$, $b_0$, $b_{k2}$ des enroulements basse tension et haute tension étant immobilisées sans jeu dans des évidements (2) des isolateurs supports (1.1, 1.2).

que les enroulements basse tension et haute tension ($w_1$, $w_2$), ainsi qu'au moins les parties (m2, m4, m5, m6) entourées par eux du noyau magnétique (M1 à M5) et les parties traversées par eux des isolateurs supports (1.1, 1.2), plongent dans un liquide diélectrique (11) isolant et de refroidissement;

que les conducteurs d'isolement ($l_1$, $l_2$; $l_{10}$, $l_{20}$) des enroulements basse tension et haute tension ($w_1$, $w_2$) présentent à leurs surfaces un coefficient de transmission thermique (α) élevé comparativement au liquide diélectrique;

que des moyens (4, 6, 7, 8, 9) sont prévus pour maintenir le noyau magnétique (M1 à M5) et les isolateurs supports (1.1, 1.2) sur une plaque de base (3) à l'intérieur d'un récipient (10) contenant le liquide diélectrique (11), de même que des traversées haute tension (15) pour les extrémités de raccordement des conducteurs d'enroulement ($l_1$, $l_2$; $l_{10}$, $l_{11}$), traversées qui sont disposées sur les parois du récipient (10.2, 10.3).

2. Transformateur d'impulsions à haute puissance selon la revendication 1, caractérisé en ce que la plus petite unité d'enroulement ($w_0$) est constituée d'au moins une disposition de spires basse tension et une disposition de spires haute tension, sous la forme de branches d'enroulement (A1 à A6, B1 à B6; $A_l$, $A_k$; $B_l$, $B_k$), les spires ($w_{01}$, $w_{02}$) voisines des deux branches d'enroulement étant disposées à la première distance minimale (a) l'une de l'autre dans le sens axial et entourant, parallèlement l'une à l'autre, la branche magnétique associée,

que plusieurs de ces plus petites unités d'enroulement ($w_0$) à enroulement parallèle, sont guidées par leurs extrémités d'enroulement à des points d'appui et de raccordement (2) sur les isolateurs supports (1.1, 1.2) et

que l'interconnexion interne d'un nombre, pouvant être choisi, d'unités d'enroulement ($w_0$) est réalisée sur les points de raccordement (2) des isolateurs supports (1.1, 1.2) pour former les enroulements basse tension et haute tension ($w_1$, $w_2$), de manière à obtenir le rapport de transformation (ü) désiré.

3. Transformateur d'impulsions à haute puissance selon la revendication 1 ou 2, caractérisé en ce qu'un isolateur support (1.1, 1.2) est coordonné à chacune des deux branches bobinées des noyaux magnétiques (M1 à M5) ou à chacun des deux grands côtés des noyaux magnétiques bobinés.

4. Transformateur d'impulsions à haute puissance selon une des revendications 1 à 3, caractérisé en ce que les isolateurs supports (1.1, 1.2) ont la forme de plaques.

5. Transformateur d'impulsions à haute puissance selon la revendication 3, caractérisé en ce que les plus petites unités partielles d'enroulement constituées par les branches d'enroulement (A1, A2) de l'enroulement basse tension ($w_1$) sont appuyées et connectées, par leurs extrémités d'enroulement (a11, a12, a21, a22), à un isolateur-support (1.2) et les plus petites unités partielles d'enroulement constituées par les branches B1, B2) de l'enroulement haute tension ($w_2$) sont appuyées et connectées, par leurs extrémités (b11, b12, b21, b22), à l'autre isolateur-support (1.1).

6. Transformateur d'impulsions à haute puissance selon une des revendications 1 à 5, caractérisé en ce qu'au moins l'enroulement ($w_2$ ou $w_1$) traversé par le courant élevé est composé de spires formées par des conducteurs creux ($l_{20}$) pouvant être refroidis également de l'intérieur, au moyen du liquide de refroidissement.

7. Transformateur d'impulsions à haute puissance selon la revendication 6, caractérisé en ce que l'enroulement secondaire ($w_2$), traversé par le courant élevé et formé d'unités partielles d'enroulement ($B_i$, $B_k$) connectées en parallèle, aussi bien que l'enroulement primaire ($w_1$), présentant la haute tension et formé d'unités partielles d'enroulement ($A_i$, $A_k$) connectées en série entre elles, sont composés de spires constituées par des conducteurs creux ($l_{20}$, $l_{10}$).

8. Transformateur d'impulsions à haute puissance selon une des revendications 1 à 7, caractérisé en ce qu'il est réalisé comme un transformateur à noyau rectangulaire (à double U ou en forme de UI).

9. Transformateur d'impulsions à haute puissance selon une des revendications 1 à 7, caractérisé en ce qu'il est réalisé comme un transformateur à noyau annulaire (figures 7, 8).

10. Transformateur d'impulsions à haute puissance selon une des revendications 1 à 7, caractérisé en ce qu'il est réalisé comme un transformateur à noyau ovale (figures 9, 10).

11. Transformateur selon une des revendications 1 à 10, caractérisé en ce que les conducteurs d'enroulement, faits d'un matériau bon conducteur, dont la résistivité correspond à

$$0{,}016 \leq \rho \left[ \frac{\Omega \cdot mm^2}{m} \right] \leq 0{,}029$$

à 20°C, présentent, à leur surface extérieure, une structure comprise dans la plage allant d'une surface métallique nue jusqu'à une mince peau oxydée ou jusqu'à une mince couche de vernis protecteur.

## Claims

1. High power pulse transformer for short high-voltage and/or high-current pulses, preferably for high-power laser (L) circuits, consisting of

at least one magnetic core (M1 to M5), constituent magnet limbs of which are arranged around a central window (5) in such a manner that the two broad sides of the magnetic core run perpendicular to the axis of the window (5.0),

and at least one of both an undervoltage and an overvoltage winding ($w_1$, $w_2$), wound round the magnetic core (M1 to M5) and linked to the magnetic core and to each other, whereby the electrically insulated metal conductors ($l_1$, $l_2$; $l_{10}$, $l_{20}$) for the coils ($w_{01}$, $w_{02}$) of the undervoltage and overvoltage winding are to a large extent brought together as a bifilar winding, characterised in that

the coils ($w_{01}$, $w_{02}$) are arranged, unsupported by the undervoltage and overvoltage windings ($w_1$, $w_2$), with a first minimum spacing (a) of the coils relative to each other and a second minimum spacing (b) relative to the magnetic core (M1 to M5) around which they are wound, and are nested into each other as a bifilar winding;

support insulators (1.1, 1.2) are arranged, with a third minimum spacing c > (b + d), adjacent to at least one of the sides of the magnetic core, whereby b represents the second minimum spacing and d the thickness of conductor of the coils ($w_{01}$, $w_{02}$) and whereby at least the winding ends (a11 to a62; b11 to b62; $a_{l1}$ to $a_{k2}$, $b_{l2}$, $b_0$, $b_{k2}$) of the undervoltage and overvoltage windings are fixed, free from play, in recesses (2) in the support insulators (1.1, 1.2);

the undervoltage and overvoltage windings ($w_1$, $w_2$) and at least the parts (m2, m4, m5, m6) of the magnetic core (M1 to M5) around which they are wound, and the parts of the support insulators (1.1, 1.2) penetrated by them are immersed in an insulating cooling dielectric liquid (11);

the winding conductors ($l_1$, $l_2$; $l_{10}$, $l_{20}$) of the undervoltage and overvoltage windings ($w_1$, $w_2$) have, with

their surfaces, a high heat-transfer coefficient ($\alpha$) relative to the dielectric liquid;

and provision is made for means (4, 6, 7, 8, 9) to retain the magnetic core (M1 to M5) and the support insulators (1.1, 1.2) on a base plate (3) within a vessel (10) containing the dielectric liquid (11), and for high-voltage bushings (15) for the connecting ends of the winding conductors ($l_1$, $l_2$; $l_{10}$, $l_{11}$) on the vessel sides (10.2, 10.3).

2. High-power pulse transformer as in Claim 1, characterised in that the smallest winding unit ($w_0$) consists of at least one of both an undervoltage and an overvoltage coil arrangement in the form of winding branches (A1 to A6, B1 to B6; $A_l$, $A_k$; $B_l$, $B_k$) and the adjacent coils ($w_{01}$, $w_{02}$) of the two winding branches are wound round the associated magnetic limb, adjacent to each other with the first minimum spacing (a) and running parallel to each other, in the direction of the axis of the coil spiral,

a majority of such parallel-wound smallest winding units ($w_0$) are guided with their winding ends to support and connection points (2) on the support insulators (1.1, 1.2)

and a selectable number of winding units ($w_0$) are connected internally at the connection points (2) of the support insulators (1.1, 1.2) to the undervoltage and overvoltage winding ($w_1$, $w_2$) in order to achieve the desired turn ratio ($\ddot{u}$).

3. High-power pulse transformer as in either of Claims 1 or 2, characterised in that a support insulator (1.1, 1.2) is allocated to each of the wound magnetic core limbs of the magnetic cores (M1 to M5) or each of the two broad sides of the wound magnetic cores.

4. High-power pulse transformer as in any one of Claims 1 to 3, characterised in that the support insulators (1.1, 1.2) have the form of plates.

5. High-power pulse transformer as in Claim 3, characterised in that the smallest winding part units, in the form of the winding branches (AI, A2) of the undervoltage winding ($w_1$), are supported and connected, with their coil ends (a11, a12, a21, a22), on a support insulator (1.2) and the smallest winding part units, in the form of the branches (BI, B2) of the overvoltage winding ($w_2$), with their coil ends (b11, b12, b21, b22), on the other support insulator (1.1).

6. High-power pulse transformer as in any one of Claims 1 to 5, characterised in that at least the high-current carrying winding ($w_2$ or $w_1$) is constituted of waveguide coils with waveguides ($l_{20}$) which can also be cooled internally by means of a cooling liquid.

7. High-power pulse transformer as in Claim 6, characterised in that both the high-current carrying secondary winding ($w_2$), comprised of winding part units ($B_l$, $B_k$) connected in parallel, and the high-current carrying primary winding ($w_1$), comprised of series-connected winding part units ($A_l$, $A_k$) are constituted of waveguide coils with waveguides ($l_{20}$, $l_{10}$).

8. High-power pulse transformer as in any one of Claims 1 to 7, characterised in that it is constructed as a rectangular core transformer (double U or UI core transformer).

9. High-power pulse transformer as in any one of Claims 1 to 7, characterised in that it is constructed as a toroidal core transformer (Fig. 7, 8).

10. High power pulse transformer as in any one of Claims 1 to 7, characterised in that it is constructed as an oval core transformer (Fig. 9, 10).

11. High power pulse transformer as in any one of Claims 1 to 10, characterised in that the winding conductors, composed of a highly conductive material having a resistivity of

$$0.016 \leq \rho \left[ \frac{\Omega \cdot mm^2}{m} \right] \leq 0.029$$

at 20°C, have an external surface structure which is within the range bare metal to a thin oxide skin or a thin protecting lacquer.

13

FIG 2

FIG 1

FIG 3

FIG 4

FIG 5

FIG 6

4

FIG 8

FIG 7

FIG 9

FIG 10